# EUROPÄISCHE PATENTSCHRIFT

(11) **EP 3 178 906 B1**
(45) Veröffentlichungstag und Bekanntmachung des Hinweises auf die Patenterteilung: **20.02.2019**
(21) Anmeldenummer: 15199492.8
(22) Anmeldetag: 11.12.2015
(51) Int. Cl.: C10G 1/10, C08L 19/00, C09C 1/48

(54) **VERFAHREN ZUR RÜCKGEWINNUNG VON RUSS AUS ELASTOMEREN**
METHOD FOR RECOVERING CARBON BLACK FROM ELASTOMERS
PROCEDE DE RECUPERATION DE SUIE PROVENANT D'ELASTOMERES

(43) Veröffentlichungstag der Anmeldung: 14.06.2017
(73) Patentinhaber: Continental Reifen Deutschland GmbH, 30165 Hannover (DE)
(72) Erfinder: Naik, Shreyas, 30173 Hannover (DE); Efimov, Konstantin, 30453 Hannover (DE); Brem, Gerrit, 8191 KT Wapenveld (NL); Bramer, Eduard A., 7665 DA Alberger (NL)
(74) Vertreter: Finger, Karsten

(56) Entgegenhaltungen:
- EP-A1- 0 698 642
- WO-A1-2013/087651
- DE-A1-102007 042 645
- GUILLERMO SAN MIGUEL ET AL: "Porosity and surface characteristics of activated carbons produced from waste tyre rubber", JOURNAL OF CHEMICAL TECHNOLOGY AND BIOTECHNOLOGY, WILEY, Bd. 77, Nr. 1, 1. Januar 2002 (2002-01-01) , Seiten 1-8, XP001577641, ISSN: 0268-2575, DOI: 10.1002/JCTB.518 [gefunden am 2001-11-28]

## Beschreibung

Die Erfindung betrifft ein Verfahren zur Rückgewinnung von feinteiligem Ruß aus dem Ausgangsmaterial rußgefüllte Kunststoffe, insbesondere Elastomere und speziell Kautschukelastomere (Gummi), und zwar mit Hilfe einer Schnellpyrolyse.

Konkret betrifft die Erfindung ein Verfahren zur Gewinnung eines feinteiligen Verkohlungsprodukts (char) aus partikelförmigen rußgefüllten Kunststoffen, insbesondere Elastomeren, als Ausgangsmaterial, wobei die Ausgangsmaterial-Partikel und ein Trägergas in einen Pyrolysereaktor eingebracht werden und wobei die erzeugten Produkte nachfolgend wenigstens in eine Festfraktion aus dem Verkohlungsprodukt und in eine gas- und dampfförmige Fraktion getrennt werden.

Allgemein handelt es sich um ein Schnellpyrolyseverfahren zur möglichst vollständigen Rückgewinnung aller wiederverwertbaren Bestandteile und insbesondere zur Gewinnung eines Recycling- bzw. Pyrolyserußes (pCB) aus rußhaltigen Kunststoffen und Elastomeren. Im Besonderen betrifft die Erfindung ein Verfahren zur Gewinnung eines als Füllstoff für neue Kunststoffe und Elastomere geeigneten feinteiligen Verkohlungsprodukts mit Ofenruß bzw. Primärruß ähnlicher Morphologie aus partikelförmigen rußgefüllten Kunststoffen, insbesondere Elastomeren als Ausgangsmaterial mit Hilfe einer Schnellpyrolyse.

Verfahren zur Wiederaufbereitung vulkanisierter Elastomerprodukte bzw. Kautschukpolymerprodukte (Gummi) und insbesondere zum Recycling von Altgummi sind als solche bekannt. Altgummi wird für die Entsorgung häufig pyrolysiert.

Unter "Pyrolyse" versteht man die thermische Spaltung chemischer Verbindungen, wobei durch hohe Temperaturen Vernetzungs- und Bindungsbrüche innerhalb der Polymerkette erzwungen werden. Es entsteht ein Pyrolysegas aus bei Zimmertemperatur nicht kondensierbaren Anteilen, insbesondere Wasserstoff und gasförmigen Kohlenwasserstoffen, ein kondensierbarer Anteil, der als Pyrolyseöl bezeichnet wird, und ein Feststoffanteil. Gummielastomere enthalten oft einen beträchtlichen Anteil verstärkender Füllstoffe, insbesondere Ruß und/oder Silica, die sich in dem Feststoffanteil wiederfinden.

Neben der reinen Abfallentsorgung besteht beim Recycling das Ziel, möglichst alle gewonnenen Bestandteile sinnvoll wieder einsetzen zu können. Hierfür ist eine schonende Behandlung und nicht zu weitgehende Zerstörung erforderlich. So lassen sich aus dem Pyrolysegas von Altgummi destillativ Kohlenwasserstofffraktionen gewinnen, wenn nicht, wie bislang häufig der Fall, lange Verweilzeiten und hohe Temperaturen eine weitgehende Zersetzung der Kohlenwasserstoffe mit sich bringen. Auf der anderen Seite dürfen die Bedingungen auch nicht zu Kondensationsprodukten wie polyzyklischen aromatischen Kohlenwasserstoffen führen. Diese Probleme sind im Stand der Technik noch nicht zufriedenstellend gelöst.

Ein weiteres Problem besteht darin, dass der rückgewonnene Pyrolyseruß in Bezug auf seine Verwendbarkeit als Füllstoff für neue Elastomerprodukte einem für diesen Zweck erzeugten Primärruß oder auch Ofenruß nicht gleichwertig ist. Pyrolyseruß fällt meist nicht feinteilig an, sondern neigt zum Verbacken mit zugleich freigesetzten pyrolysierten Elastomerbestandteilen, so dass sich Agglomerate bilden, die die Füllstoffqualität stark herabsetzen.

Aus der DE 10 2007 042 645 A1 ist ein Verfahren zum pyrolytischen Verwerten von Altreifen bekannt, bei dem zunächst die Abtrennung der Metallanteile aus dem Verbundmaterial vor dem Pyrolyseschritt vorgesehen ist. Die Kunststoffanteile werden nachfolgend pyrolysiert, wodurch neben Aromaten Pyrolyseruß gewonnen wird, hier auch als Pyrolysekoks bezeichnet. Der gewonnene Koks mit Korngrößen zwischen 5 und 150 µm ist als Füllstoff für neue Reifen ungeeignet. Der Koks soll zu wertvollen Produkten, wie z.B. Aktivkohle, weiterverarbeitet werden. Es hat sich jedoch herausgestellt, dass derartig hochaggregierte Ruße nicht ohne weiteres durch Vermahlen auf unter 10 µm gebracht werden können, so dass eine Verwendung zum Beispiel als Reifengummi-Füllstoff ausscheidet.

Die EP 0 698 642 A1 betrifft ein Verfahren zur Herstellung von Ruß durch Pyrolyse von Gummiabfällen. Die Gummiabfälle werden hierzu auf eine Größe zwischen 2 und 5 mm gemahlen. Der Temperaturbereich der Pyrolyse beträgt 600 bis 1100°C und die Verweilzeit beträgt bis zu 200 Minuten. Das Verfahren findet in einem Drehrohrofen innerhalb verschiedener aneinander angrenzender Temperaturzonen statt bis das Produkt den Reaktor bereits bis auf ca. 150 °C bis 350 °C abgekühlt verlässt.

Das Paper "Porosity and surface characteristics of activated carbons produced from waste tyre rubber" von Guillermo San Miguel et al., erschienen in Journal of Chemical Technology and Biotechnology 77: 1-8 (online: 2001) betrifft eine Untersuchung, bei der Partikel von Reifengummi unterschiedlicher Größe bei einer Temperatur von 925°C pyrolisiert wurden. Die Verweilzeit der Partikel in dem Pyrolyseofen betrug 80-640 Minuten.

Die WO 2013/087651 betrifft ein Verfahren zur Herstellung einer Mischung eines definierten Durchgangwiderstandes unter Zugabe von Ruß. Der Ruß stammt von gebrauchten Reifen, die in einem Reaktor bei Temperaturen zwischen 420 und 600°C für 2 bis 6 Stunden in einem Reaktor pyrolisiert wurden.

Die Aufgabe der Erfindung besteht darin, ein Pyrolysefahren für das Recycling von insbesondere rußgefüllten Elastomeren und anderen Kunststoffen anzugeben, bei dem die Produkte Gas-, Flüssig- und Feststoffphase so anfallen, dass sie unmittelbar weiterverwertbar sind. Insbesondere besteht die Aufgabe darin, einen als Füllstoff für Kunststoffe und Gummi-Produkte geeigneten, feinteiligen Recycling-Ruß zu gewinnen.

Die Aufgabe wird mit einem Verfahren zur Gewinnung eines feinteiligen Verkohlungsprodukts (char) aus partikelförmig vorliegenden, rußgefüllten Kunststoffen, insbesondere Elastomeren, mit Hilfe einer Schnellpyrolyse, d.h. dem Verfahren nach Anspruch 1 gelöst. Vorteilhafte Ausgestaltungen des Verfahrens sind in den Unteransprüchen angegeben.

Der Erfindung liegt der Gedanke zugrunde, dass ein vorrangiges Ziel beim Recycling ein möglichst geringer Anteil an nicht verwertbaren Reststoffen und ein möglichst hoher Anteil an wertvollen, wiederverwertbaren Stoffen guter Qualität in Bezug auf gewünschte (Wieder-)Verwendung sein sollte. Auch energetisch sollte das neue Verfahren günstig sein. Bisher wurde mit relativ hohem Energieeintrag gearbeitet, um bei hohen Temperaturen über relativ lange Behandlungsdauer Schadstoffe vollständig durch Cracken beseitigen zu können und einen hochkohlenstoffhaltigen Ruß zu erzeugen. Nach neuerer Erkenntnis ist die Morphologie des Rußes für seine Qualität sehr entscheidend.

Ein erster Aspekt der Erfindung besteht darin, dass es energetisch günstiger ist, das Ausgangsmaterial feiner zu zerteilen als bisher üblich und den begrenzten energetischen Mehraufwand hierfür in Kauf zu nehmen, um dann eine schnelle Pyrolyse an den feinen Teilchen durchzuführen. Hierdurch wird im Vergleich zu der energetisch ungünstigen langsamen klassischen Pyrolyse an größeren Teilchen, die über mehrere Stunden bei hohen Temperaturen behandelt werden müssen, sehr viel Energie eingespart.

Ein weiterer Aspekt der Erfindung besteht darin, dass der Pyrolysereaktor so auszuwählen ist, dass eine sehr schnelle Wärmeübertragung und dadurch eine sehr schnelle Pyrolyse möglich ist. Die Temperaturen sollten auf maximal 750 °C begrenzt werden, Auf diese Weise wird ein Verkohlungsprodukt mit ausgezeichneter, primärrußähnlicher Morphologie erhalten, der unmittelbar oder nach vergleichsweise wenig aufwändiger Nachbehandlung im ursprünglichen Sinne, d.h. als Füllstoff wiederverwendbar ist. Bei langen Verweilzeiten wird der Kohlenstoff demgegenüber umgebildet, agglomeriert und verliert an aktiver Oberfläche, was zu vermeiden ist. Die erfindungsgemäß kurze Verweilzeit begünstigt die gewünschte Feinteiligkeit. Das als fester Pyrolyserückstand abgenommene Verkohlungsprodukt ist wie Ofenruß bzw. Primärruß einsetzbar, z.B. als Füllstoffruß in Elastomeren für technische Gummiprodukte wie Reifen sowie in anderen technischen Produkten aus thermoplastischen Kunststoffen, Gummi oder anderen Elastomeren, einschließlich thermoplastischer Elastomere.

Zugleich wird ein zu starkes Cracken der flüssig bis gasförmigen Bestandteile vermieden, was deren Wert und Weiterverwendbarkeit verbessert. Das erhaltene Pyrolyseöl kann als Diesel- oder Heizöl verwendet werden. Es kann auch rektifiziert und weiter aufbereitet werden.

Das erfindungsgemäße Verfahren nutzt eine Schnellpyrolyse, auch als Flash-Pyrolyse bezeichnet, die an einem partikelförmigen Ausgangsmaterial aus rußgefüllten Kunststoffen, insbesondere Elastomeren und speziell Kautschukelastomeren ausgeführt wird. Die Schnellpyrolyse umfasst neben der eigentlichen Pyrolyse der Polymer- und Elastomeranteile auch eine Schnellverflüssigung (Liquefaction) der in den zerkleinerten Kunststoff- und Elastomer-Produkten ggf. ebenfalls enthaltenen niedermolekularen Anteile aus Weichmacherölen und Additiven. Die schnellverflüssigten Weichmacheröle finden sich im Pyrolyseöl wieder.

Die Gewinnung des feinteiligen Verkohlungsprodukts umfasst dabei die Rückgewinnung des im Ausgangsmaterial enthaltenen Füllstoffrußes. Hierzu kommt eine Verkokung anderer organisch-chemischer Bestandteile des Ausgangsmaterials während der Pyrolyse. Aufgrund der kurzen Verweilzeiten und gemäßigten Temperaturen ist dieser Anteil jedoch eher gering. Dennoch handelt es sich bei dem Feststoffanteil des Verfahrensprodukts insgesamt um ein Verkohlungsprodukt (char) bzw. einen Pyrolyseruß und nicht einen allein durch Separation zurückgewonnenen Füllstoffruß. Überraschend ist die gute Qualität und ggf. unmittelbare Nutzbarkeit dieses Verkohlungsprodukts.

Als Ausgangsmaterial kommen grundsätzlich sämtliche rußgefüllten Kunststoffe in Betracht, zu denen beispielsweise auch leitfähige rußgefüllte Kunststoffe zählen. Ein bevorzugtes Ausgangsmaterial für das erfindungsgemäße Verfahren sind jedoch rußgefüllte Elastomere und insbesondere rußgefüllte Kautschukelastomere, also vernetzte bzw. vulkanisierte Stoffe.

Ein sehr wesentlicher Teil des wiederaufzuarbeitenden Altgummis stammt aus Altreifen und steht in Form von Pulver, Mehl, Granulat oder Runderneuerungs-Abschliff zur Verfügung. Das Altgummi wird, falls erforderlich, vor der Durchführung der Pyrolyse weiter zerkleinert, um ein Ausgangsmaterial mit einer für die Schnellpyrolyse vorteilhaften Partikelgröße bereitstellen zu können.

Die Partikelgröße des Ausgangsmaterials ist erfindungsgemäß kleiner als oder gleich 1 mm Siebdurchgangsgröße. Damit wird ausgeschlossen, dass einzelne große Teilchen, die bei einer zu breiten Größenverteilung der Partikel um einen Durchmesser-Mittelwert vorkommen können, unvollständig aufbereitet werden und die Qualität der Produkte beeinträchtigen. Vorzugsweise liegt die Partikelgröße des Ausgangsmaterials ab 0,2 bis 1 mm Siebdurchgangsgröße und besonders bevorzugt bis 0,5 mm Siebdurchgangsgröße, beispielsweise um 0,4 mm, entsprechend 400 µm oder 40 mesh.

Das Trägergas sorgt für den Transport und die gleichmäßige Verteilung der Teilchen im Reaktionsraum. Es soll selbst an der Reaktion nicht teilnehmen, so dass es sich um ein in Bezug auf die Pyrolyse inertes Trägergas handeln sollte. Hierfür ist das Trägergas vorzugsweise ausgewählt aus der Gruppe Stickstoff (N₂), Kohlendioxid (CO₂) und Edelgase sowie Mischungen aus diesen Gasen.

Der Schnellpyrolysereaktor wird erfindungsgemäß so ausgewählt, dass ein hoher gleichmäßiger Durchsatz bei geringer Verweilzeit und ein schneller, effizienter Wärmeübergang auf das zu behandelnde Material gegeben sind. Zu diesem Zweck werden erfindungsgemäß entweder ein Strömungsrohrreaktor oder ein Zyklonreaktor als Schnellpyrolysereaktor bzw. -einheit verwendet.

Die Verweilzeit beträgt erfindungsgemäß maximal 10 Sekunden. Die Reaktion kann bereits bei Mindestverweilzeiten von wenigen zehntel Sekunden, insbesondere ab 1

Sekunde und weiter bevorzugt ab 4 Sekunden ablaufen. Die Reaktorparameter können auf die gewünschten Verweilzeiten, die die Morphologie des Feststoffprodukts wesentlich beeinflussen, angepasst und optimiert werden.

Die als optimal für das zu bearbeitende Material ausgewählte Verweilzeit steht auch im Zusammenhang mit der jeweiligen Partikelgröße. In einem Rohrreaktor wurde beispielsweise eine Verweilzeit von 6 bis 8 Sekunden für bestimmte 40 mesh-Reifengummiteilchen als optimal ermittelt. Die Einstellung der Parameter muss vom Fachmann jeweils in Abstimmung mit den Vorgaben der Apparatur und der Recycling-Aufgabe vorgenommen werden.

Weiterhin wurde gefunden, dass die Reaktor- und Behandlungstemperatur zwischen 400 und 750 °C betragen sollte und vorzugsweise zwischen 400 und 650 °C, weiter vorzugsweise bis 600 °C. Bevorzugt ist weiterhin, wenn die Temperatur oberhalb 450 °C beträgt, beispielsweise zwischen 500 und 550 °C.

Die Produkte werden nach der Pyrolyse abgeführt, getrennt und unmittelbar verwendet oder weiterverarbeitet.

Für die Produkttrennung kann besonders vorteilhaft ein Zyklon oder eine Zyklon-Kaskade eingesetzt werden. In einem Zyklon werden Feststoffteilchen bis zu einer bestimmten Korngrößengrenze aus Gasströmen abgetrennt, wie dies allgemein bekannt ist und hier nicht näher ausgeführt werden muss. Zyklone sind wartungsarm und für diese Trennaufgabe gut geeignet. Selbstverständlich könnten auch andere Trenneinheiten eingesetzt werden. In Weiterbildung dieser Erfindung ist vorgesehen, dass das feinteilige Verkohlungsprodukt oder in anderen Worten der Pyrolyseruß aus diesem Schnellpyrolyseverfahren am Feststoffausgang des Zyklons oder des letzten Zyklons der Kaskade abgenommen wird. Die Temperatur im Zyklon/in den Zyklonen wird vorzugsweise so eingestellt, dass alle bei Normaldruck und Raumtemperatur nicht festen Bestandteile, nämlich das Pyrolyseöl und -gas in der Gasphase gehalten und im Kopfbereich der Zyklone bzw. Separatoren abgenommen werden. Das Pyrolyseöl wird aus diesem gemischten Gasstrom nach Austritt aus den Zyklonen bzw. dem Separationsschritt kondensiert und, wie oben schon beschrieben, entweder direkt einer Verwendung zugeführt oder rektifiziert, gereinigt oder in sonstiger Weise weiterverarbeitet.

In dem Falle, dass der Schnellpyrolysereaktor selbst ein Zyklon ist, dient dieser auch unmittelbar einer ersten Trennung. Dem Schnellpyrolyse-Zyklonreaktor kann wenigstens ein weiterer Zyklon nachgeschaltet sein, so dass wiederum eine Kaskade gebildet wird. Das weitere Trennverfahren entspricht dem, was vorstehend beschrieben wurde, d.h. Pyrolysegas und Pyrolyseöl werden als Kopfprodukt aus dem Zyklonreaktor und/oder den nachfolgenden Separationszyklonen abgenommen und der Weiterverarbeitung und - verwendung zugeführt. Vorteilhafterweise können Zyklone, die innerhalb des Verfahrens eingesetzt werden, mit einem Partikelfilter vor dem Kopfproduktausgang ausgerüstet sein, der in der Lage ist, den sehr feinteiligen Ruß zurückzuhalten. Geeignete Filter sind bekannt, es können Feinstaub-Rotationsfilter eingesetzt werden.

Gemäß einer Ausführungsform der Erfindung ist der Schnellpyrolysereaktor ein Strömungsrohrreaktor. Die Verweilzeit ergibt sich aus Strömungsgeschwindigkeit und Reaktorlänge. Die Länge ist groß im Vergleich zum Reaktordurchmesser. Die Reaktortemperatur wird durch Beheizen der Reaktorwand eingestellt, so dass mit den langgestreckten Strömungsrohrreaktoren ein sehr guter Wärmeeintrag in das Reaktorinnere und somit das zu behandelnde Material verwirklicht werden kann, wie grundsätzlich bekannt.

In bevorzugter Ausführung ist der Strömungsrohrreaktor ein vertikaler Strömungsrohrreaktor. Auf diese Weise wird wirksam verhindert, dass sich die im Trägergasstrom befindlichen Feststoffteilchen durch die Gravitationswirkung an der Rohrwandung absetzen können. Weiterhin ist es bevorzugt, wenn die Feststoff- und die Trägergasführung gleichgerichtet sind. Dies bewirkt gerade in einem vertikalen Rohr eine sehr gute Pfropfströmung mit einer eng verteilten Verweilzeitcharakteristik.

Besonders bevorzugt ist der Einsatz eines vertikalen Strömungsrohrreaktors mit abwärts gerichteter Feststoff- und Trägergasführung (Downer). Bei einem "Downer" handelt es sich um einen modernen Fluidbett-Reaktor mit annähernd perfekter Pfropfströmung, in dem Gas und Feststoffe gemeinsam und gleichmäßig abwärts strömen. Er ist für schnelle Reaktionen wie die Flash-Pyrolyse besonders geeignet.

Der Fachmann kann einen solchen Reaktor den Bedürfnissen entsprechend berechnen und auslegen, wie exemplarisch anhand eines katalytischen Crackverfahrens in "Modeling, Simulation and Optimization of FCC Downer Reactor", V. Kumar Koratiya, S. Kumar and S. Sinha in "Petroleum & Coal, 52 (3) 183-192, 2010", beschrieben.

In Weiterbildung der Erfindung ist vorgesehen, dass das als Feststoffphase abgenommene Verkohlungsprodukt einer Nachbehandlung, insbesondere einem Tempern, unterzogen wird. Hierfür wird das Verkohlungsprodukt in einer Inertgas Atmosphäre oder im Vakuum über wenigstens 2 bis 5 Minuten bei vorzugsweise ca. 200 bis 400 °C behandelt. Ein Vakuum wird vorzugsweise dann angewendet, wenn der Anteil an flüchtigen Bestandteilen in dem Verkohlungsprodukt relativ hoch ist. Die Bedingungen, unter denen das Tempern durchgeführt wird, können der Recycling-Aufgabe angepasst werden. Beispielsweise kann die Nachbehandlung über einen deutlich längeren Zeitraum von mehreren Stunden geführt werden, insbesondere bei einer Behandlung im Vakuum und bei einer geringeren Temperatur von beispielsweise unter 200 °C oder ca. 200 bis 250 °C. Durch die Nachbehandlung werden die Teilchengröße und die Morphologie des Feststoffprodukts konsolidiert.

Das Verfahren kann nach einem weiteren Aspekt der Erfindung eine Vorbehandlung des Ausgangsmaterials umfassen.

Vorzugsweise kann das partikelförmige Ausgangsmaterial mit einem Quellungsmittel, vorzugsweise einem Öl oder einem polaren Lösungsmittel, gemischt und dem Schnellpyrolysereaktor in Form dieses Gemisches zugeführt werden. Das Quellen des Ausgangsmaterials kann zu einem schnelleren und effektiveren Aufschluss des Materials im Pyrolyseschritt führen. Das Quellen kann dadurch unterstützt werden, dass die Partikel, d.h. das partikelförmige Ausgangsmaterial, oder das Lösemittel bzw. Quellmittel oder das Gemisch erwärmt werden. Es ist ebenfalls möglich, die trockenen Ausgangspartikel zu erwärmen, damit die Pyrolysetemperatur im Reaktor schneller erreicht wird. Ausgangsmaterial, Quellungsmittel oder das Gemisch werden vorzugsweise auf ca. 80 °C bis 100 °C vorgewärmt, bevor sie dem Schnellpyrolysereaktor zugeführt werden.

Es ist außerdem bevorzugt, dass das partikelförmige Ausgangsmaterial oder das Gemisch unter Eintrag mechanischer Energie, vorzugsweise in einem Dosierextruder, vorbehandelt wird, bevor das Gemisch dem Schnellpyrolysereaktor zugeführt wird. Hierdurch wurde eine Steigerung der Pyrolyse-Effektivität festgestellt.

Gemäß einer vorteilhaften Weiterbildung der Erfindung wird die abgetrennte Festfraktion aus einem ersten und optional weiteren Abtrennschritten teilweise und/oder zeitweilig in den Schnellpyrolysereaktor zurückgeführt. Diese Verfahrensvarianten bieten sich besonders für den Rohrreaktor an.

Der Fachmann wird das Verfahren den Bedürfnissen in Details weiter anpassen. So kann es beispielsweise vorteilhaft sein, das Trägergas nach Abtrennung des Pyrolysegases zurückzuführen und dem Schnellpyrolysereaktor wieder zuzuführen. Auch das Trägergas kann vorzugsweise vor Eintritt in den Schnellpyrolysereaktor erwärmt werden, vorzugsweise auf eine Temperatur zwischen 80 °C und der Reaktortemperatur.

In den bevorzugten Ausführungsformen ist ferner vorgesehen, das Trägergas und das partikelförmige Ausgangsmaterial, optional vorbehandelt und im Gemisch mit Quellmittel, d.h. einen polaren Lösemittel, bevorzugt einem Öl, vorgemischt und gemeinsam in den Schnellpyrolysereaktor einzubringen.

Im Folgenden wird die Erfindung anhand beigefügter Zeichnungen näher erläutert. Diese dienen allein der Illustration zum besseren Verständnis der Erfindung. Der Fachmann wird weitere Beispiele aus dem allgemeinen Teil der Beschreibung ableiten können.

In den Zeichnungen zeigen
- Figur 1: - eine schematische Schnittdarstellung eines SchnellpyrolyseZyklonreaktors
- Figur 2: - einen Schnellpyrolyse-Downer in einer Anlage mit nachfolgender Zyklonabscheidung, wiederum in schematischer Darstellung.

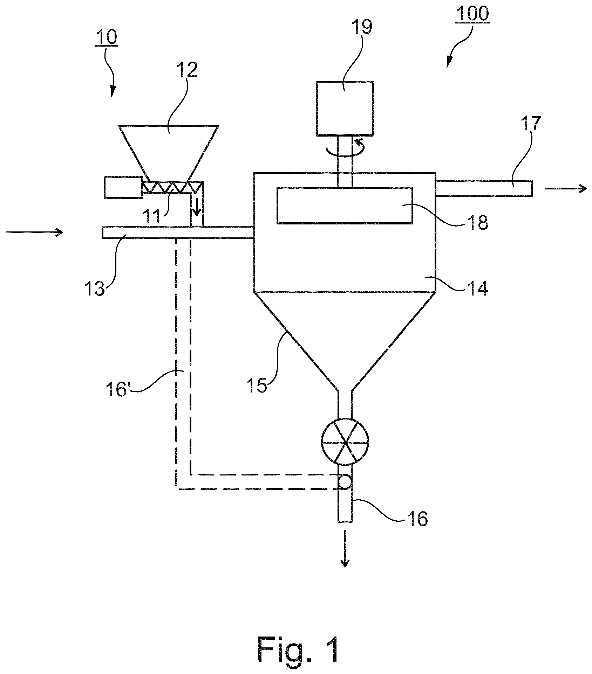

Es wird Bezug auf Figur 1 genommen. Der im Ganzen mit 100 bezeichnete Zyklonreaktor besitzt eine Maßdosierungs-Zugabeeinheit 10 mit einem Schneckenförderer bzw. Dosierextruder 11, mit dem das über den Trichter 12 eintretende partikuläre Ausgangsmaterial der Zuleitung 13 für den Zyklonreaktor zugeführt wird. Gleichzeitig wird dem Zyklonreaktor 100 durch die Leitung 13 in Pfeilrichtung heißes Trägergas zugeführt. Trägergas und partikuläres Ausgangsmaterial treten auf diesem Wege gemeinsam in den Reaktorraum 14 ein, in dem die Schnellpyrolyse stattfindet. Der Zyklonreaktor 100 wird über seine Reaktoraußenwand 15 beheizt. Dies kann beispielsweise elektrisch geschehen. Da die Wärmeübertragung in einem Zyklonreaktor gut ist, kann mit kurzen Verweilzeiten gearbeitet werden. Es tritt eine Verflüssigung der Weichmacheröle und bestimmter Zusatzbestandteile ein sowie eine Pyrolyse der polymeren und/oder elastomeren Bestandteile. Der in dem Ausgangsmaterial enthaltene Ruß-Füllstoff fällt zusammen mit dem neu gebildeten Pyrolyseprodukt Ruß und ggf. vorhandenen Additivfeststoffen als Feststoff im Bodenbereich des Zyklons an. Das gemischte Verkohlungsprodukt wird über die Ausgangsleitung 16 abgezogen und wie ein üblicher Pyrolyseruß verwendet oder weiterbehandelt. Optional kann hier eine Rückführung eines Teils des Verkohlungsprodukts über die Feststoff-Rückführleitung 16' vorgesehen sein. Aufgrund der eingestellten Pyrolysetemperatur von beispielsweise 500 °C befinden sich alle übrigen der aufgeschlossenen Produkte, außer den Feststoffen, in der Gasphase und werden als Kopfprodukt über die Ausgangsleitung 17 abgezogen. Vor dem Ausgang des Zyklonreaktors befindet sich ein Hochtemperaturfilter 18. Im vorliegenden Beispiel ein Rotationsfilter, der über den Antrieb 19 angetrieben wird. Hierdurch verlassen Pyrolyseöl und Pyrolysegas den Reaktor gemeinsam in gasförmigem Zustand praktisch partikelfrei. Aus diesen gasförmigen Produkten fällt das Pyrolyseöl nach Kondensation an. Es kann unmittelbar weiterverwendet oder raffiniert werden. Das Pyrolysegas kann in üblicher Weise weiterverwendet werden.

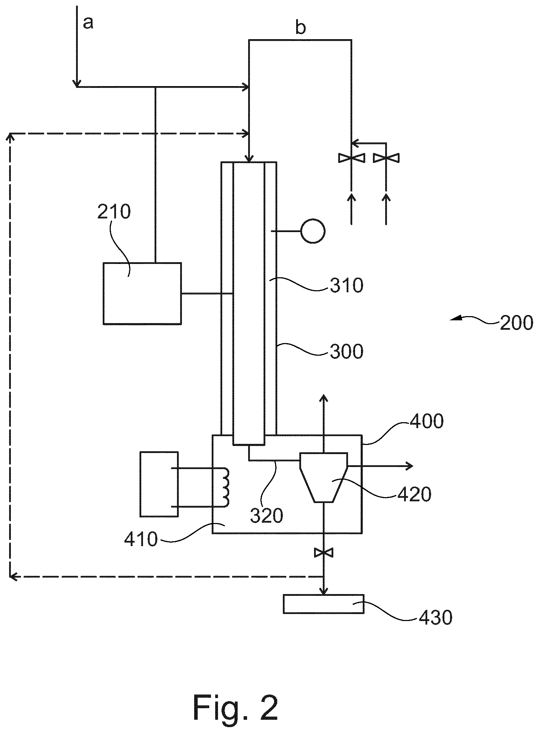

Es wird Bezug genommen auf Figur 2. Figur 2 zeigt schematisch eine Schnellpyrolyseanlage 200 mit einem vertikalen Strömungsrohrreaktor 300 mit gleichgerichtetem abwärts verlaufendem Stoffstrom, dem eine Zykloneinheit 400 nachgeschaltet ist. Das Ausgangsmaterial wird über Zugabeweg a aufgegeben und erreicht den Kopf des Strömungsrohrreaktors 300 bereits im Gemisch mit dem über Zugabeweg b aufgegebenen Inertgas. Der Strömungsrohrreaktor 300 wird über seine Außenwand 310 temperiert. Die Temperaturregelung und die Stoffstromsteuerung für das Ausgangsmaterial wird mit Hilfe eines Steuerungscomputers 210 bewerkstelligt. Die Inertgaszuführung wird über den Druck reguliert. Im Zugabeweg a befindet sich eine hier nicht näher dargestellte Maßdosierungseinrichtung für das Ausgangsmaterial in Form eines Schneckenförderers mit Zugabeeinheit, wie im Einzelnen in Figur 1 gezeigt. Die in dem Feststoffreaktor 300 gebildeten Schnellpyrolyse und Liquidifikationsprodukte verlassen den Reaktor am unteren Ende gemeinsam durch die Ausgangsleitung 320, um in einer Trenneinheit, hier einer Zykloneinheit 400 aufgetrennt zu werden. Anstelle der einzelnen Zykloneinheit 400 kann sich auch eine Zyklon-Kaskade anschließen. Die Zykloneinheit 400 besteht aus einem beheizten Ofenraum 410, in dem der Zyklon 420 angeordnet ist. Der Aufbau des Zyklons 420 entspricht grundsätzlich dem in Figur 1 gezeigten Zyklonreaktor, außer dass die Temperatur auf einem geringeren Niveau gehalten wird, sodass keine Pyrolyse sondern lediglich eine Trennung betrieben wird. Der abgenommene Feststoffanteil, nämlich das Verkohlungsprodukt der Schnellpyrolyse, wird in einen Sammelbehälter 430 überführt und danach ggf. einer Nachbehandlung zugeführt. Optional kann hier eine Rückführung eines Teils des Verkohlungsprodukts oder eine periodische Rückführung des Verkohlungsprodukts über den Weg c vorgenommen werden. Die in Figur 2 gezeigte Schnellpyrolyseanlage wird beispielsweise so betrieben, dass feine Partikel in Form von Runderneuerungsabschliff aus einem Reifenelastomer mit einer Siebdurchgangsgröße von ca. 40 mesh mit einer präzisen Kontrolle des Masseflusses, die über den Steuerungscomputer 210 bewerkstelligt wird, in einem Trägergasstrom aus Stickstoff und Kohlendioxid aufgegeben werden. Der Downer ist dabei auf eine Temperatur zwischen 450 und 550 °C eingestellt. Die Verweilzeit beträgt 6 bis 8 Sekunden. Das daraus am Ende des Prozesses erhaltene Feststoffprodukt ist in seiner Struktur einem Ofenruß vergleichbar. Die Teilchengröße liegt deutlich unter 1 µm bei geringer Neigung zur Aggregation. Ein in dem Produkt noch vorhandener Gehalt an flüchtigen Bestandteilen wird durch ein Tempern im Vakuum bei 200 °C über 2 bis 5 Minuten entfernt. Der Strömungsrohrreaktor 300 besitzt eine Länge von 5 m bei einem Durchmesser von einigen Zentimetern.

### Bezugszeichenliste

### (Teil der Beschreibung)

- 100: Zyklonreaktor
- 10: Maßdosierungs-Zugabeeinheit
- 11: Dosierextruder
- 12: Trichter
- 13: Zuleitung
- 14: Reaktorraum
- 15: Reaktoraußenwand
- 16: (Feststoff-)Ausgangsleitung
- 16': Feststoff-Rückführleitung
- 17: (Kopfprodukt-)Ausgangsleitung
- 18: Hochtemperaturfilter
- 19: (Rotations-)antrieb
- 200: Schnellpyrolyseanlage
- 210: Steuerungscomputer
- 300: Strömungsrohrreaktor (Downer)
- 310: Außenwand (Strömungsrohrreaktor)
- 320: Ausgangsleitung
- 400: Zyklon-Einheit
- 410: beheizter Ofenraum
- 420: Zyklon
- 430: Sammelbehälter Feststoffprodukt
- a: Zugabeweg Ausgangsmaterial
- b: Zugabeweg Inertgas
- c: Weg für (Feststoff-)Rückführung

## Patentansprüche

1. Verfahren zur Gewinnung eines feinteiligen Verkohlungsprodukts (char) aus partikelförmigen rußgefüllten Kunststoffen, insbesondere Elastomeren, als Ausgangsmaterial, wobei die Ausgangsmaterial-Partikel und ein Trägergas in einen Pyrolysereaktor eingebracht werden und wobei die erzeugten Produkte nachfolgend wenigstens in eine Festfraktion aus dem Verkohlungsprodukt und in eine gas- und dampfförmige Fraktion getrennt werden, **dadurch gekennzeichnet, dass** der Pyrolysereaktor ein Strömungsrohrreaktor (300) oder ein Zyklonreaktor (100) ist, der mit einer Reaktortemperatur von 400 °C bis 750 °C betrieben wird, dass die Partikel eine Partikelgröße bis 1 mm Siebdurchgangsgröße besitzen und dass diese Partikel, bewegt im Trägergasstrom, über eine Verweilzeit von maximal 10 Sekunden in dem Pyrolysereaktor gehalten werden..

2. Verfahren nach Anspruch 1, **dadurch gekennzeichnet, dass** die Reaktor- und Behandlungstemperatur 400 - 650 °C, vorzugsweise 450 bis 600 °C beträgt.

3. Verfahren nach Anspruch 1 oder 2, **dadurch gekennzeichnet, dass** für die Produkttrennung ein Zyklon (420) oder eine Zyklon-Kaskade eingesetzt wird, einschließlich des Zyklonreaktors (100) der zugleich für die Produkttrennung oder als erster Zyklon einer Trennkaskade dient.

4. Verfahren nach einem der Ansprüche 1 bis 3, **dadurch gekennzeichnet, dass** gebildetes Pyrolysegas und Pyrolyseöl als Kopfprodukt aus dem Zyklonreaktor (100) und/oder den nachfolgenden Separationszyklonen (420) abgenommen und der Weiterverarbeitung und -verwendung zugeführt werden.

5. Verfahren nach einem der Ansprüche 1 bis 4, **dadurch gekennzeichnet, dass** der Strömungsrohrreaktor (300) ein vertikaler Strömungsrohrreaktor ist, vorzugsweise mit gleichgerichteter Feststoff- und Trägergasführung, weiter vorzugsweise mit abwärts gerichteter Feststoff- und Trägergasführung (Downer).

6. Verfahren nach einem der Ansprüche 1 bis 5, **dadurch gekennzeichnet, dass** das Verkohlungsprodukt einer Nachbehandlung (einem Tempern) in einer Inertgas Atmosphäre oder im Vakuum unterzogen wird, vorzugsweise bei ca. 200 bis 400 °C über wenigstens 2 bis 5 Minuten.

7. Verfahren nach einem der Ansprüche 1 bis 6, **dadurch gekennzeichnet, dass** das partikelförmige Ausgangsmaterial mit einem Quell- und Lösemittel, vorzugsweise einem Öl, gemischt und dem Schnellpyrolysereaktor (100, 300) in Form dieses Gemisches zugeführt wird.

8. Verfahren nach einem der Ansprüche 1 bis 7, **dadurch gekennzeichnet, dass** das partikelförmige Ausgangsmaterial oder das Quellmittel oder das Gemisch daraus auf ca. 80 °C bis 100 °C vorgewärmt werden.

9. Verfahren nach Anspruch 7 oder 8, **dadurch gekennzeichnet, dass** das partikelförmige Ausgangsmaterial oder das Gemisch unter Eintrag mechanischer Energie, vorzugsweise in einem Dosierextruder (11), vorbehandelt wird, bevor das Gemisch dem Schnellpyrolysereaktor (100, 300) zugeführt wird.

10. Verfahren nach einem der Ansprüche 1 bis 9, **dadurch gekennzeichnet, dass** das Trägergas ausgewählt ist aus der Gruppe N₂, CO₂, Edelgase oder Mischungen daraus.

11. Verfahren nach einem der Ansprüche 1 bis 10, **dadurch gekennzeichnet, dass** das Trägergas nach Strippen des Pyrolysegases zurückgeführt und dem Schnellpyrolysereaktor (100, 300) wieder zugeführt wird.

12. Verfahren nach einem der Ansprüche 1 bis 11, **dadurch gekennzeichnet, dass** das Trägergas vor Eintritt in den Schnellpyrolysereaktor (100, 300) erwärmt wird, vorzugsweise auf eine Temperatur zwischen 80 °C und der Reaktortemperatur.

13. Verfahren nach einem der Ansprüche 1 bis 12, **dadurch gekennzeichnet, dass** das Trägergas und das partikelförmige Ausgangsmaterial, optional im Gemisch mit dem Quell- und Lösemittel, vorgemischt und gemeinsam in den Schnellpyrolysereaktor (100, 300) eingebracht werden.

14. Verfahren nach einem der Ansprüche 1 bis 13, **dadurch gekennzeichnet, dass** die abgetrennte Festfraktion aus einem ersten und optional weiteren Abtrennungsschritten teilweise und/oder zeitweilig in den Schnellpyrolysereaktor zurückgeführt werden.

## Claims

1. Method for recovering a finely divided carbonization product (char) from carbon black-filled particulate plastics, more particularly elastomers, as starting material, where the starting material particles and a carrier gas are introduced into a pyrolysis reactor and where the products generated are subsequently separated at least into a solids fraction comprising the char and into a gaseous and vaporous fraction, **characterized in that** the pyrolysis reactor is a flow tube reactor (300) or a cyclone reactor (100) which is operated with a reactor temperature of 400°C to 750°C, **in that** the particles possess a particle size of up to 1 mm screening size and **in that** these particles in agitation in the carrier gas stream are held over a residence time of not more than 10 seconds in the pyrolysis reactor.

2. Method according to Claim 1, **characterized in that** the reactor and treatment temperature is 400-650°C, preferably 450 to 600°C.

3. Method according to Claim 1 or 2, **characterized in that** product separation takes place using a cyclone (420) or a cyclone cascade, including the cyclone reactor (100) which also serves for product separation or as first cyclone of a separation cascade.

4. Method according to any of Claims 1 to 3, **characterized in that** pyrolysis gas and pyrolysis oil formed are taken off as an overhead product from the cyclone reactor (100) and/or from the subsequent separation cyclones (420) and are supplied for further processing and further use.

5. Method according to any of Claims 1 to 4, **characterized in that** the flow tube reactor (300) is a vertical flow tube reactor, preferably having codirected solids and carrier gas feed, more preferably having downwardly directed solids and carrier gas feed (downers).

6. Method according to any of Claims 1 to 5, **characterized in that** the char is subjected to aftertreatment (heat treatment) in an inert gas atmosphere or under reduced pressure, preferably at about 200 to 400°C over at least 2 to 5 minutes.

7. Method according to any of Claims 1 to 6, **characterized in that** the particulate starting material is mixed with a swelling agent and solvent, preferably an oil, and is supplied to the fast pyrolysis reactor (100, 300) in the form of this mixture.

8. Method according to any of Claims 1 to 7, **characterized in that** the particulate starting material or the swelling agent or the mixture thereof is preheated to about 80°C to 100°C.

9. Method according to Claim 7 or 8, **characterized in that** the particulate starting material or the mixture is pretreated with input of mechanical energy, preferably in a metering extruder (11), before the mixture is supplied to the fast pyrolysis reactor (100, 300).

10. Method according to any of Claims 1 to 9, **characterized in that** the carrier gas is selected from the group of N₂, CO₂, noble gases or mixtures thereof.

11. Method according to any of Claims 1 to 10, **characterized in that** the carrier gas after stripping of the pyrolysis gas is recycled and is supplied again to the fast pyrolysis reactor (100, 300) .

12. Method according to any of Claims 1 to 11, **characterized in that** the carrier gas before entry into the fast pyrolysis reactor (100, 300) is heated, preferably to a temperature between 80°C and the reactor temperature.

13. Method according to any of Claims 1 to 12, **characterized in that** the carrier gas and the particulate starting material, optionally in a mixture with the swelling agent and solvent, are introduced jointly and as a premix into the fast pyrolysis reactor (100, 300).

14. Method according to any of Claims 1 to 13, **characterized in that** the solids fraction separated off from a first and optionally further separation steps is recycled partially and/or intermittently into the fast pyrolysis reactor.

## Revendications

1. Procédé de récupération d'un produit de carbonisation finement divisé (résidu de carbonisation) à partir de plastiques particulaires chargés avec du noir de carbone, notamment d'élastomères, en tant que matériau de départ, les particules du matériau de départ et un gaz vecteur étant introduits dans un réacteur de pyrolyse et les produits formés étant ensuite séparés au moins en une fraction solide constituée par le produit de carbonisation et en une fraction gazeuse et vapeur, **caractérisé en ce que** le réacteur de pyrolyse est un réacteur tubulaire à écoulement (300) ou un réacteur à cyclone (100), qui est exploité avec une température de réacteur de 400 °C à 750 °C, **en ce que** les particules présentent une taille de particule de jusqu'à 1 mm de taille de tamisat et **en ce que** ces particules, déplacées dans le courant de gaz vecteur, sont maintenues pendant un temps de séjour d'au plus 10 secondes dans le réacteur de pyrolyse.

2. Procédé selon la revendication 1, **caractérisé en ce que** la température du réacteur et de traitement est de 400 à 650 °C, de préférence de 450 à 600 °C.

3. Procédé selon la revendication 1 ou 2, **caractérisé en ce qu'**un cyclone (420) ou une cascade de cyclones est utilisé pour la séparation du produit, y compris le réacteur à cyclone (100) qui sert en même temps pour la séparation du produit ou en tant que premier cyclone d'une cascade de séparation.

4. Procédé selon l'une quelconque des revendications 1 à 3, **caractérisé en ce qu'**un gaz de pyrolyse et une huile de pyrolyse formés sont soutirés en tant que produit de tête du réacteur à cyclone (100) et/ou des cyclones de séparation ultérieurs (420), et introduits dans le traitement et l'utilisation ultérieurs.

5. Procédé selon l'une quelconque des revendications 1 à 4, **caractérisé en ce que** le réacteur tubulaire à écoulement (300) est un réacteur tubulaire à écoulement vertical, de préférence avec alimentation de solides et de gaz vecteur dans la même orientation, de manière davantage préférée avec alimentation de solides et de gaz vecteur orientée vers le bas (downer).

6. Procédé selon l'une quelconque des revendications 1 à 5, **caractérisé en ce que** le produit de carbonisation est soumis à un traitement secondaire (un recuit) dans une atmosphère de gaz inerte ou dans le vide, de préférence à environ 200 à 400 °C pendant au moins 2 à 5 minutes.

7. Procédé selon l'une quelconque des revendications 1 à 6, **caractérisé en ce que** le matériau de départ particulaire est mélangé avec un agent gonflant et solvant, de préférence une huile, et introduit dans le réacteur de pyrolyse rapide (100, 300) sous la forme de ce mélange.

8. Procédé selon l'une quelconque des revendications 1 à 7, **caractérisé en ce que** le matériau de départ particulaire ou l'agent gonflant ou le mélange de ceux-ci est préchauffé à environ 80 °C à 100 °C.

9. Procédé selon la revendication 7 ou 8, **caractérisé en ce que** le matériau de départ particulaire ou le mélange est prétraité avec apport d'énergie mécanique, de préférence dans une extrudeuse de dosage (11), avant l'introduction du mélange dans le réacteur de pyrolyse rapide (100, 300).

10. Procédé selon l'une quelconque des revendications 1 à 9, **caractérisé en ce que** le gaz vecteur est choisi dans le groupe constitué par N₂, CO₂, les gaz nobles ou leurs mélanges.

11. Procédé selon l'une quelconque des revendications 1 à 10, **caractérisé en ce que** le gaz vecteur est recyclé après l'extraction du gaz de pyrolyse, et réintroduit dans le réacteur de pyrolyse rapide (100, 300).

12. Procédé selon l'une quelconque des revendications 1 à 11, **caractérisé en ce que** le gaz vecteur est chauffé avant l'entrée dans le réacteur de pyrolyse rapide (100, 300), de préférence à une température comprise entre 80 °C et la température ambiante.

13. Procédé selon l'une quelconque des revendications 1 à 12, **caractérisé en ce que** le gaz vecteur et le matériau de départ particulaire, éventuellement en mélange avec l'agent gonflant et solvant, sont pré-mélangés et introduits ensemble dans le réacteur de pyrolyse rapide (100, 300).

14. Procédé selon l'une quelconque des revendications 1 à 13, **caractérisé en ce que** la fraction solide séparée lors de la première étape de séparation et éventuellement d'autres étapes de séparation est recyclée en partie et/ou par intermittence dans le réacteur de pyrolyse rapide.
